(19) Europäisches Patentamt
European Patent Office
Office européen des brevets

(11) Publication number: 0 123 653
B1

(12) **EUROPEAN PATENT SPECIFICATION**

(45) Date of publication of patent specification: **28.10.87**

(51) Int. Cl.$^4$: **F 28 D 7/10,** A 23 G 1/18,
F 28 F 13/06

(21) Application number: **84810172.1**

(22) Date of filing: **09.04.84**

(54) **Static heat exchanger with high efficiency in particular suitable for the cooling of viscous fluids.**

(30) Priority: **22.04.83 CH 2169/83**

(43) Date of publication of application:
**31.10.84 Bulletin 84/44**

(45) Publication of the grant of the patent:
**28.10.87 Bulletin 87/44**

(84) Designated Contracting States:
**AT BE DE FR GB IT LU NL SE**

(56) References cited:
**WO-A-82/02004**
**DE-A-3 212 727**
**DE-B-1 070 656**
**DE-C- 144 700**
**FR-A-2 435 964**
**US-A-3 483 920**

(73) Proprietor: **Kurier Holding AG**
**FL-9492 Eschen (LI)**

(72) Inventor: **Rima, Sergio**
**Via Locarno 7**
**CH-6612 Ascona (CH)**

(74) Representative: **Baggiolini, Raimondo et al**
***Racheli & Fiammenghi* Via San Gottardo 15**
**CH-6900 Lugano (CH)**

EP 0 123 653 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention refers to a static heat exchanger comprising a succession of tubular conduits crossing and alternating.

The difficulty of submitting a viscous fluid having a Reynolds number below 2000 to a cooling process and a high dynamic viscosity is well known.

The difficulties increase if from the viscous fluid the latent fusion heat or crystallization has to be extracted to cause it to solidify in one successive operation. There is the risk of a blockage of the apparatus due to excess cooling.

Normal exchangers with tube bundles or with plates due to their characteristic of having a high efficiency only with liquids provided with turbulent motion, cannot be used.

At present therefore recourse is had to exchangers with scraped surface which conveys mechanically the viscous fluid from the zone in which the cooling has occurred.

The cost of putting into practice such exchangers is very high: the power employed is high due to the necessity of keeping the fluid in motion, the space taken up is considerable and thus also the cost of manufacture due to the complexity of the system.

Frequent maintenance efforts are required subject to a drastic drop in the output.

Static exchangers are also known, comprising a succession of tubular conduits crossing and alternating passed through internally by a cooling fluid and overlapped externally by a fluid to be cooled, the whole adapted to divide said fluid to be cooled into partial flows with displacement of their recombination, said tubular conduits being disposed according to a succession of planes perpendicular to the direction of advance of the fluid to be cooled and inclined in respect of each plane, each conduit being provided with an under plate solid with it; the cooling fluid passing internally into said tubular conduits being caused to recirculate in a closed cycle.

Patent specification FR—A—2 435 964 describes a heat exchanger of high efficiency, suitable for the cooling of viscous fluids comprising a succession of tubular conduits crossing and alternating, passed through internally by a cooling fluid, and passed over externally by a fluid to be cooled, the whole adapted to divide said fluid to be cooled into partial flows with displacement of their recombination.

The disadvantage of this heat exchanger is the following: the division of the fluid to be cooled into partial flows with displacement of their recombination is not effective since the circular cross section of each tubular conduit does not allow the effective division of the fluid to be cooled into partial flows and their distribution along all the length of the conduits lying immediately above.

Each tubular conduit according to the present invention, on the contrary, is solid with a superimposed plate which ensures the correct division of the fluid to be cooled and the effective displacement of the recombination of the partial flows as said, i.e. along all the length of the conduits lying immediately above.

It is true that the DE—B—1 070 656 provides a heat exchanger with tubular conduits of circular cross section each tube being solid with a place, but this *plate* is solid *below* the conduit and not *superimposed* to it so that its effectiveness to divide the partial flows and to displace them correctly is negligible.

The WO—A—82/02004 publication provides an exchanger in which the cooling fluid (silicone oil) passing through internally into the tubular conduits recirculates intermittently in a closed cycle to induce temperature changes.

The heat exchanger according to the present invention provides a recirculation of the fluid to be cooled in a closed cycle at constant temperature and an effective distribution of said fluid along the length of the conduits.

The heat exchanger according to the present invention solving the above mentioned problem has the following advantages compared with known exchangers:

1. It is a cooling unit in itself with optimum proportions (fixed in design location) between the passage sections of the viscous fluid and the cooling water.

2. More units may be connected in series to increase the exchange capacity.

3. It does not have preferential paths in the zone concerning the fluid to be cooled.

4. The cooling temperature may be predetermined with a jump of a few degrees centrigrade between the fluid to be cooled and the cooling fluid.

5. It is within quite wide limits independent of the possible variations of the temperature of the cooling fluid which can be verified by using water in the winter or summer period.

6. It permits to withdrawing the latent fusion crystallization heat from the fluid to be cooled without undercooling it causing hardening or crystallization the inside of the apparatus.

In the following some applications may be cited:

a) Cooling of masses of liquid chocolate.

b) Cooling of greases, waxes, paraffins, hotmelt, before preparation.

c) Fractioning by means of cooling of mineral, vegetable or animal fats.

d) Separation by means of subtraction of heat from isomers of chemical products.

The heat exchanger which is in particular suitable for the cooling of viscous fluids is characterised by the characterising features of Claim 1.

For greater clarity the attached drawing represents a preferred embodiment of the invention.

Fig. 1 shows it in longitudinal section on the plane passing through I—I in Fig. 3.

Fig. 2 shows it also in longitudinal section, orthogonal in respect of that of Fig. 1, that is, on the plane passing through II—II in Fig. 3.

Fig. 3 shows the cross section on the plane passing through III—III in Fig. 1.

Fig. 4 shows the behaviour of the fluid streams of the viscous liquid when the tubular conduit is of circular section.

Fig. 5 shows the behaviour of the fluid streams of the viscous liquid with a plate for spreading the flow and with the tubular conduit/plate combination perpendicular to the direction of advancement of the viscous fluid.

Fig. 6 shows the behaviour of the fluid streams of the viscous liquid with a plate for spreading the flow and the tubular conduit/plate inclined in respect of the direction of advancement of the viscous fluid according to the present invention.

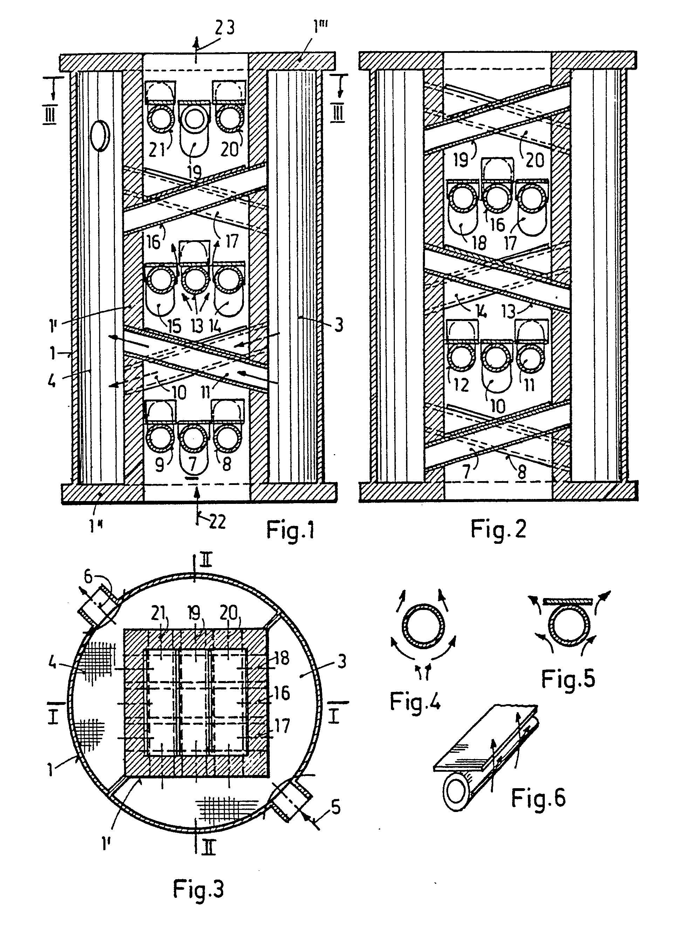

Referring to Fig. 1:

The heat exchanger and in particular the cooler in question comprises the outer casing 1 containing an inner casing 1′ with the walls disposed quadrilateral (see also Fig. 3) defining two adjacent chambers 3 and 4 the first for inlet of the cooling water, the second for outlet of same, inlet and outlet as per the arrows 5 and 6.

On the walls of the casing 1′ of square section terminate the inclined tubular conduits 7, 8, 9 orthogonal in respect of the upper inclined conduits in their turn orthogonal in respect of the upper also inclined conduits 13, 14, 15 again in their turn orthogonal in respect of the upper also inclined conduits 16, 17, 18 so that the said spatial disposition of the set of inclined conduits 7, 8, 9 will be repeated according to the series of inclined conduits 19, 20, 21.

The viscous liquid is caused to pass from the bottom to the top in the direction of the arrows 22 and 23.

The operation is as follows:

A viscous liquid passes through the inside of the quadrangular chamber 1′ from the bottom to the top entering according to the arrow 22 and leaving in the direction of the arrow 23 whilst the cooling water enters in the direction of the inlet 5 (Fig. 3) passes through all the tubular conduits (from 7 to 21) and leaves in the direction of the outlet 6 in order then to be caused to recirculate at high velocity and quantity by means of a pump (not shown) in a closed cycle. Along its course in vertical direction the viscous fluid is forced to divide into fluid streams diverging and partially converging towards the top part of the tubular conduit/plate combination in consequence of its special cross section as illustrated in Fig. 6.

A gauge taking the temperature of the viscous fluid after the passage of this on the end set of tubular conduits 19, 20, 21 will cause to be effected on the cooling circuit a restoration of water at lower temperature and at the same time an evacuation of the said quantity of water now thermically exhausted.

The cooling circuit constituted by the connection pipes (arrows 5 and 6, Fig. 3) and by the pump (not shown) has the minimum possible volume compatible with the constructional requirements.

Thus also the sum of the sections of the tubular conduits present in the chamber 3 or 4 (Fig. 3) is less than the minimum section existing in the cooling circuit pipes, arrows 5 and 6 of Fig. 3 and pump).

This permits of arranging that:

a) The number of recycles of the cooling water be raised (by way of indication from 10 to 30 recycles on 1′).

b) The velocity of the cooling water in the tubular conduits be considerably high/greater than 3—4 m/sec.).

Therefore the corrective intervention of the temperature controlled by the gauge place up stream of the cooler is immediate on account of the small volume of the cooling circuit but rapidly transferred to the viscous fluid by way of the large number of recycles and the high velocity of the water.

If the tubular conduits were of simply circular section, that is to say without plate as shown in Fig. 4, the fluid streams treated by a fluid having rolling motion instead of diverging would combine at the top with a limited exchange of heat.

The surface of the plates placed over a set of tubular conduits (example 7, 8, 9 in Fig. 1) is greater than the inside surface of the inner casing 1′ (Fig. 1) that is to force the viscous fluid to flow through the triangular sections formed by two adjacent conduits and by the walls of the chamber 1′ (Fig. 1).

If the tubular conduits provided with plates were perpendicular to the direction of advance of the viscous fluid (Fig. 5) besides not having a convergence of the fluid streams towards the top part of the conduits (Fig. 6) the upper plates would have to be of reduced dimensions to create passage openings having the same section as the triangular openings existing with the inclined conduits.

There would thus be formed along the cooler, passage openings between which the viscous fluid could reach the end of the apparatus without being concerned in the cooling process.

Besides that, the alternative crossing of the sets of tubular conduits 7, 8, 9 in respect of the sets of upper tubular conduits 10, 11, 12 and so on, repeating the same spatial configuration with a modulus equal to 4, forces the viscous fluid to rise divided into diverging flows to recombine with the adjacent diverging flows changing upon each meeting with a new set of tubular conduits crossed in respect of the preceding one.

By the invention cooling becomes efficient and permits working with viscous fluids in a rational manner without the use of scrapers.

**Claims**

1. Static heat exchanger, suitable for the cooling of viscous fluids, comprising a succession of tubular conduits crossing and alternating passed through internally by a cooling fluid caused to recirculate in a closed circuit at constant temperature and passed over externally by a fluid to be cooled, the whole adapted to divide said fluid to be cooled into partial flows with displacement of their recombination, characterized in that said tubular conduits are disposed inclined in planes perpendicular to the direction of the fluid to be cooled, the conduits of the first plane being disposed orthogonally in respect of the corresponding conduits of the second adjacent plane and the conduits of the third adjacent plane being disposed parallely in respect to the conduits of the first plane and in that each conduit is, in direction of the fluid to be cooled, provided with an upper solid plate.

2. Static heat exchanger according to claim 1, characterized in that each plane comprises three adjacent tubular conduits which are contained in an inner chamber (1') of a quadrilateral cross-section; said inner chamber (1') being contained in an outer casing (1) of circular cross-section, provided with inlet (5) and outlet (6) pipes for the cooling fluid.

**Patentansprüche**

1. Wärmetauscher mit feststehenden Elementen, zur Kühlung von viskosen Flüssigkeiten, mit einer Reihe rohrförmiger Leitungen, die sich kreuzen und abwechseln, die innen von einer in einem geschlossenen Kreis bei einer konstanten Temperatur umströmenden Kühlflüssigkeit durchströmt und außen von einer zu kühlenden Flüssigkeit umströmt sind, wobei eine Unterteilung der zu kühlenden Flüssigkeit in Teilströme und eine Verlagerung ihrer Wiedervereinigung erfolgt, dadurch gekennzeichnet, daß die rohrförmigen Leitungen in Ebenen geneigt angeordnet sind, die zur Richtung der zu kühlenden Flüssigkeit senkrecht verlaufen, wobei die Leitungen der ersten Ebene in Bezug zu den entsprechenden Leitungen der benachbarten zweiten Ebene senkrecht und wobei die Leitungen der benachbarten dritten Ebene in Bezug zu den Leitungen der ersten Ebene parallel angeordnet sind, und daß jede Leitung in Richtung der zu kühlenden Flüssigkeit mit einer oberen festen Platte versehen ist.

2. Wärmetauscher mit feststehenden Elementen nach Anspruch 1, dadurch gekennzeichnet, daß jede Ebene drei benachbarte rohrförmige Leitungen aufweist, die in einer inneren Kammer (1') rechteckigen Querschnitts enthalten sind, wobei die innere Kammer (1') in einem äußeren Gehäuse (1) kreisförmigen Querschnitts enthalten ist, das mit Einlaß- und Auslaßrohren (5, 6) für die Kühlflüssigkeit versehen ist.

**Revendications**

1. Echangeur de chaleur statique convenant pour le refroidissement de fluides visqueux, comprenant une succession de conduits qui se croisent en alternance, sont parcourus intérieurement par un fluide de refroidissement destiné à être remis en circulation en un circuit fermé à température constante et reçoivent extérieurement un fluide à refroidir, le tout étant adapté pour diviser ledit fluide à refroidire en écoulements partiels avec déplacement de leur regroupement, caractérisé en ce que lesdits conduits tubulaires sont disposés inclinés dans des plans perpendiculaires à la direction du fluide à refroidir, les conduits du premier plan étant disposés orthogonalement par rapport aux conduits correspondants du second plan adjacent et les conduits du troisième plan adjacent étant disposés parallèlement aux conduits du premier plan et en ce que chaque conduit est, en direction du fluide à refroidir, muni d'une plaque solide supérieure.

2. Echangeur de chaleur statique selon la revendication 1, caractérisé en ce que chaque plan comprend trois conduits tubulaires adjacents qui sont contenus dans une chambre inférieure (1') à coupe en quadrilatère, ladite chambre intérieure 1' étant contenue dans une enveloppe extérieure (1) à section transversale circulaire munie de tuyaux d'entrée (5) et de sortie (6) pour le fluide de refroidissement.

23
1'''
III
III
21
19
20
16
17
15
13
14
1'
3
1
4
10
11
9
7
8
1''
22
19
20
16
18
17
14
13
12
10
11
7
8
II
6
21
19
20
4
18
3
16
I
I
17
1
5
1'
II
Fig.1

Fig.2

Fig.3

Fig.4

Fig.5

Fig.6